# EUROPÄISCHE PATENTSCHRIFT

(11) **EP 1 844 896 B1**
(45) Veröffentlichungstag und Bekanntmachung des Hinweises auf die Patenterteilung: **12.12.2007**
(21) Anmeldenummer: 06007672.6
(22) Anmeldetag: 12.04.2006
(51) Int. Cl.: B23Q 7/03

(54) **Maschinelle Anordnung zum Positionieren von Werkstücken und/oder von Bearbeitungsresten einer Werkstückbearbeitung sowie damit versehene maschinelle Anordnung zum Bearbeiten von Werkstücken**
Device for positioning of workpieces and/or waste of a treatment and device for treating workpieces equipped therewith
Dispositif de positionnement de pièces et/ou de déchets et dispositif de traitement de pièces en étant équipé

(43) Veröffentlichungstag der Anmeldung: 17.10.2007
(73) Patentinhaber: Trumpf Sachsen GmbH, 01904 Neukirch (DE)
(72) Erfinder: Harnisch, Gunter, 01936 Königsbrück (DE); Knobel, Carsten, 02689 Sohland (DE)
(74) Vertreter: Kohler Schmid Möbus

(56) Entgegenhaltungen:
- DE-A1- 3 618 584
- DE-U1- 9 106 020

## Beschreibung

Die Erfindung betrifft eine maschinelle Anordnung zum Positionieren von Werkstücken und/oder von Bearbeitungsresten einer Werkstückbearbeitung,
- mit einem Ladegutträger, der mit wenigstens einem Werkstück und/oder mit wenigstens einem Bearbeitungsrest beladbar ist,
- mit einer Fördervorrichtung, mittels derer ein Ladegutträger in eine Zielposition bewegbar ist sowie
- mit einer Justiervorrichtung, mittels derer der Ladegutträger bei Abweichen der Zielposition von einer Sollposition unter Bewegen des Ladegutträgers in einer Justagerichtung in die Sollposition überführbar ist,
wobei die Fördervorrichtung ein angetrieben bewegbares Fördermittel für den Ladegutträger und zwischen dem Fördermittel und dem Ladegutträger eine Mitnahmeeinrichtung aufweist, über welche der Ladegutträger an das Fördermittel anbindbar ist und die ihrerseits ein mit dem Fördermittel bewegungsverbundenes fördermittelseitiges Mitnahmeelement sowie ein mit dem Ladegutträger bewegungsverbundenes ladegutträgerseitiges Mitnahmeelement umfasst. Die Erfindung betriff des Weiteren eine maschinelle Anordnung zum Bearbeiten von Werkstücken, die eine Anordnung der vorstehenden Art aufweist.

Anordnungen zum Positionieren von Werkstücken und/oder von Bearbeitungsresten werden unter anderem an Werkzeugmaschinen, beispielsweise an Laserschneidmaschinen, eingesetzt. Sie dienen dort dazu, dem Arbeitsbereich der Werkzeugmaschine die zu bearbeitenden Werkstücke zuzuführen und nach der Werkstückbearbeitung die Fertigteile oder die Bearbeitungsreste aus dem Arbeitsbereich der Werkzeugmaschine abzufördern. Als Ladegutträger können Paletten vorgesehen sein. Auf den Ladegutträgern sind jedenfalls die in eine Bearbeitungsposition zu überführenden Werkstücke räumlich definiert angeordnet. Infolgedessen ist die Position des Ladegutes über die Position des mit diesem beladenen Ladegutträgers bestimmt. Einer Bearbeitungs- Sollposition des zu bearbeitenden Werkstückes ist eine Sollposition des Ladegutträgers zugeordnet. Eine exakte Positionierung des Werkstückes in der Bearbeitungs-Sollposition und somit eine exakte Positionierung des betreffenden Ladegutträgers in der Sollposition ist für den Bearbeitungserfolg von ausschlaggebender Bedeutung.

Mittels eines angetrieben bewegbaren Fördermittels einer Fördervorrichtung werden die beladenen Ladegutträger in eine für die Fördervorrichtung definierte Zielposition bewegt. Diese kann beispielsweise aufgrund momentaner Ungenauigkeiten in dem Antriebsstrang des Fördermittels von der bezüglich des Bearbeitungswerkzeuges der Werkzeugmaschine vorgegebenen Sollposition abweichen. Bei Vorliegen einer derartigen Abweichung wird der Ladegutträger mit Hilfe einer Justiervorrichtung, etwa einer mechanischen Indexierung, aus der Zielposition in die Sollposition überführt. Schwierigkeiten können bei dieser Feinpositionierung insofern auftreten, als der betreffende Ladegutträger während seiner Bewegung in die Zielposition möglichst spielfrei an das angetrieben bewegbare Fördermittel anzubinden ist, diese spielfreie Anbindung aber eine mittels der Justiervorrichtung der Anordnung vorzunehmende Feinpositionierung des Ladgutträgers behindern oder sogar unmöglich machen kann. Nur bei im Wesentlichen spielfreier Anbindung des Ladegutträgers an das angetrieben bewegbare Fördermittel ist gewährleistet, dass sich der Ladegutträger gleichförmig, insbesondere ruckfrei in seine Zielposition bewegt und dass das auf dem Ladegutträger abgelegte Ladegut seine gegenüber dem Ladegutträger definierte räumliche Anordnung beibehält. Realisiert wird die spielfreie Anbindung des Ladegutträgers an das angetrieben bewegbare Fördermittel über fördermittelseitige und ladegutträgerseitige Mitnahmeelemente, die in Bewegungsrichtung des Ladegutträgers im wesentlichen spielfrei aneinander abgestützt sind.

Druckschriftlich offenbart ist eine Anordnung der vorstehenden Art in DE 38 44 248 A1.

Der Erfindung liegt ausgehend von dem gattungsgemäßen Stand der Technik die Aufgabe zu Grunde, eine maschinelle Anordnung zum Positionieren von Werkstücken und/oder von Bearbeitangsresten einer Werkstückbearbeitung sowie eine maschinelle Anordnung zum Bearbeiten von Werkstücken bereitzustellen, im Falle derer ungeachtet einer während der Bewegung in die Zielposition mit geringem Spiel, insbesondere im wesentlichen spielfrei, hergestellten Anbindung von Ladegutträgern an das Fördermittel eine Feinpositionierung der Ladegutträger in die Sollposition möglich ist.

Erfindungsgemäß gelöst wird diese Aufgabe durch die maschinelle Anordnung nach Patentanspruch 1 bzw. durch die maschinelle Anordnung gemäß Patentanspruch 12.

Im Falle der Erfindung ist demnach zwischen dem fördermittelseitigen Mitnahmeelement der Mitnahmeeinrichtung und dem Fördermittel und/oder zwischen dem ladegutträgerseitigen Mitnahmeelement der Mitnahmeeinrichtung und dem Ladegutträger eine Kupplung vorgesehen, die bezüglich ihres in der Justagerrichtung des Ladegutträgers bestehenden Spiels gesteuert werden kann. Während der Bewegung des Ladegutträgers in die Zielposition ist das Kupplungsspiel auf einen verhältnismäßig kleinen Wert, vorzugsweise auf einen Wert nahe, idealerweise gleich Null eingestellt. Dadurch ergibt sich während der Bewegung des Ladegutträgers in die Zielposition eine allenfalls mit einem sehr geringen Spiel behaftete Anbindung des Ladegutträgers an das angetrieben bewegbare Fördermittel. Für die Feinpositionierung des Ladegutträgers, d.h. für dessen Überführung von der Zielposition in eine von der Zielposition abweichende Sollposition, wird das Kupplungsspiel vergrößert. Bei vergrößertem Kupplungsspiel lässt sich der Ladegutträger mittels der Justiervorrichtung in die Sollposition bewegen. Eine exakte Positionierung des auf dem Ladegutträger angeordneten Werkstückes bzw. Bearbeitungsrestes ist damit gewährleistet, ohne dass zu diesem Zweck eine komplizierte Steuerung für das angetrieben bewegbare Fördermittel vorzusehen wäre, die beispielsweise ein aufwändiges Messsystem zur Ermittlung der Istposition des Ladegutträgers bzw. des Ladegutes und zur Ermittlung der Abweichung dieser Istposition von der Sollposition zu umfassen hätte. Während der Feinpositionierung können die beiderseitigen Mitnahmeelemente gegebenenfalls ihren gegenseitigen mechanischen Eingriff beibehalten. Dies vereinfacht die Abläufe insbesondere in Fällen, in denen der Ladegutträger im Anschluss an die Feinpositionierung weitergetaktet wird.

Besondere Ausführungsarten der Erfindung nach den Patentansprüchen 1 und 12 ergeben sich aus den abhängigen Patentansprüchen 2 bis 11.

Im Sinne der Erfindung ist eine steuerbare Kupplung der beschriebenen Art denkbar entweder zwischen dem fördermittelseitigen Mitnahmeelement und dem angetrieben bewegbaren Fördermittel oder zwischen dem ladegutträgerseitigen Mitnahmeelement und dem Ladegutträger aber auch sowohl zwischen dem fördermittelseitigen Mitnahmeelement und dem Fördermittel als auch zwischen dem ladegutträgerseitigen Mitnahmeelement und dem Ladegutträger.

Erfindungsgemäß bevorzugt wird ausweislich Patentanspruch 2 die erstgenannte Alternative. Eine steuerbare Kupplung ausschließlich zwischen dem fördermittelseitigen Mitnahmeelement und dem Fördermittel hat den Vorteil, dass eine einzige steuerbare Kupplung ausreicht, um für eine Mehrzahl nacheinander bewegter Ladegutträger eine Bewegungsverbindung mit dem angetrieben bewegbaren Fördermittel herzustellen, die während der Bewegung der Ladegutträger in die Zielposition ein allenfalls geringes Spiel aufweist und die dennoch eine Feinpositionierung der Ladegutträger mittels der Justiervorrichtung der Anordnung zulässt. Es entfällt die Notwendigkeit, an jedem einzelnen der zu bewegenden Ladegutträger eine steuerbare Kupplung vorzusehen. Bei entsprechender konstruktiver Ausführung kann das fördermittelseitige Mitnahmeelement mit dem ladegutträgerseitigen Mitnahmeelement unterschiedlicher Ladegutträgerbauarten zusammenwirken. Ist die Veränderung des Kupplungsspiels mit einer Kraftrückwirkung auf die mit der Kupplung versehenen Bauteile verbunden, so wird bei Anordnung der steuerbaren Kupplung zwischen dem fördermittelseitigen Mitnahmeelement und dem Fördermittel eine Kraftrückwirkung auf den Ladegutträger vermieden. Eine Kraftrückwirkung auf den Ladegutträger könnte eine exakte Positionierung des Ladegutes erschweren.

Für die konstruktive Gestaltung der steuerbaren Kupplung bietet sich erfindungsgemäß eine Mehrzahl von Möglichkeiten. Von besonderem Vorteil ist die in Patentanspruch 3 beschriebene Kupplungsbauart. In diesem Fall wird das Spiel der Kupplung in der Justagerichtung des Ladegutträgers gesteuert über den gegenseitigen Abstand eines mitnahmeelementseitigen sowie eines ladegutträgerseitigen Kupplungselementes in der genannten Richtung. Eine derartige Abstandssteuerung lässt sich mit konstruktiv einfachen Mitteln und dessen ungeachtet mit hoher Funktionssicherheit realisieren.

Der gegenseitige Abstand der einander zugeordneten Kupplungselemente in der Justagerichtung des Ladegutträgers ist auf unterschiedliche Art und Weise veränderbar. In besonderer Ausgestaltung der Erfindung ist im Interesse einer konstruktiv einfachen und funktionssicheren Gesamtanordnung vorgesehen, dass die einander zugeordneten Kupplungselemente zur Steuerung ihres gegenseitigen Abstandes relativ zueinander bewegt werden (Patentanspruch 4).

Besonders praxistaugliche Bauarten von Kupplungselementen, im Falle derer eine Relativbewegung der Kupplungselemente mit einer Veränderung ihres gegenseitigen Abstandes einhergeht, sind den Patentansprüchen 5 und 6 zu entnehmen.

Im Interesse eines hohen Automatisierungsgrades der Gesamtanordnung ist im Falle der Erfindungsbauart nach Patentanspruch 7 eine Steuereinrichiung zur Steuerung des Kupplungsspiels in der Justagerichtung des Ladegutträgers vorgesehen.

Von einer besonders zweckmäßigen Steuereinrichtung macht die in Patentanspruch 8 beschriebene Ausführungsform der erfindungsgemäßen Anordnung Gebrauch. Zum Betrieb der anspruchsgemäßen Kolben- Zylinder-Einheit können Druckmedien verwendet werden, die an Anordnungen der erfindungsgemäßen Art ohnehin zur Verfügung stehen.

Gleichfalls zur Gewährleistung eines hohen Automatisierungsgrades der Gesamtanordnung ist in weiterer Ausgestaltung der Erfindung das Spiel der Kupplung in der Justagerichtung des Ladegutträgers gegen die Wirkung einer Rückstellkraft von einem verhältnismäßig kleinen auf einen verhältnismäßig großen Wert vergrößerbar (Patentanspruch 9). Unter der Wirkung der Rückstellkraft verkleinert sich das Kupplungsspiel selbsttätig von dem verhältnismäßig großen auf einen verhältnismäßig kleinen Wert. Nach der Feinpositionierung des Ladegutträgers wird die steuerbare Kupplung demzufolge ohne weiteres in denjenigen Betriebszustand überführt, in welchem sie eine gleichförmige, insbesondere ruckfreie Bewegung des betreffenden Ladegutträgers ermöglicht. Dadurch vereinfacht sich insbesondere ein Weitertakten der Ladegutträger.

Definierte Verhältnisse sollen an der Mitnahmeeinrichtung erfindungsgemäßer Anordnungen auch bei verhältnismäßig großem Spiel zwischen dem mitnahmeelementseitigen Kupplungselement und dem diesem zugeordneten Kupplungselement herrschen.

Ausweislich Patentanspruch 10 ist zu diesem Zweck in weiterer Ausgestaltung der Erfindung vorgesehen, dass ein gemeinschaftlich mit dem betreffenden mitnahmeelementseitigen Kupplugselement bewegtes fördermittelseitiges oder ladegutträgerseitiges Mitnahmeelement bei verhältnismäßig großem Kupplungsspiel gegen Verkippen an einem zugeordneten Widerlager abgestützt ist.

Zweckmäßigerweise erfolgt diese Abstützung über wenigstens ein Wälzelement (Patentanspruch 11). Das oder die erfindungsgemäßen Wälzelemente gestatten bei der Feinpositionierung des Ladegutträgers eine leichtgängige Bewegung des gemeinschaftlich mit dem Ladegutträger verlagerten Mitnahmeelementes gegenüber dem zugeordneten Widerlager.

Handelt es sich bei dem Widerlager - wie im Falle der Erfindungsbauart nach Patentanspruch 12 vorgesehen - um eine Widerlagerplatte, so kann für die Abstützung des Mitnahmeelementes eine großflächige Basis zur Verfugung gestellt werden.

Nachstehend wird die Erfindung anhand schematischer Darstellungen zu einem Ausführungsbeispiel näher erläutert. Es zeigen:
- Figur 1:: eine maschinelle Anordnung zum Laserschneiden von Blechen unter anderem mit einem Maschinenrahmen einer Bearbeitungseinheit sowie mit einer Fördervorrichtung zur Beschickung der Bearbeitungseinheit mit zu bearbeitenden Blechen,
- Figuren 2 und 3:: eine Mitnahmeeinrichtung der Fördervorrichtung gemäß Figur 1 in zwei unterschiedlichen Betriebszuständen,
- Figuren 4 und 5:: die Fördervorrichtung gemäß Figur 1 bei der Übernahme einer Palette für ein zu bearbeitendes Blech und
- Figuren 6 und 7:: vergrößerte Einzeldarstellungen zu dem Ausschnitt VI/VII von Figur 1.

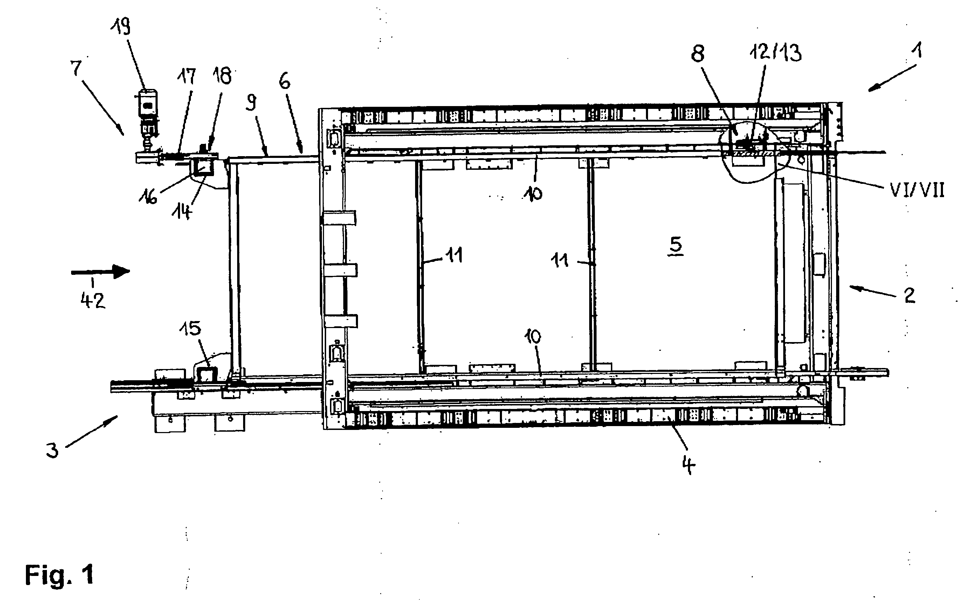

Gemäß Figur 1 umfasst eine maschinelle Anordnung 1 zum Laserschneiden von Blechen eine Bearbeitungseinheit 2 sowie eine maschinelle Anordnung 3 zum Positionieren von zu bearbeitenden Blechen an der Bearbeitungseinheit 2. Wesentliche Funktionen der maschinellen Anordnung 1 sind numerisch gesteuert.

Von der Bearbeitungseinheit 2 ist ein Maschinenrahmen 4 gezeigt. Dieser führt in seiner Längsrichtung ein Portal, das mit einem oder zwei in Querrichtung des Maschinenrahmens 4 verfahrbaren Laserschneidköpfen versehen ist. Das Portal und die Laserschneidköpfe sind aus Gründen der Darstellungsvereinfachung nicht gezeigt. Einem Arbeitsbereich der Bearbeitungseinheit 2 ist das Bezugszeichen 5 zugeordnet.

Die maschinelle Anordnung 3 dient zum Positionieren von zu bearbeitenden Blechen in dem Arbeitsbereich 5 der Bearbeitungseinheit 2. Sie umfasst Ladegutträger in Form von Paletten 6, von denen in Figur 1 eine Palette 6 angedeutet ist Ein weiterer Bestandteil der maschinellen Anordnung 3 ist eine Fördervorrichtung 7, mittels derer Paletten 6 in eine Zielposition an der Bearbeitungseinheit 2 bewegt werden. Weicht die mittels der Fördervorrichtung 7 definierte Zielposition einer Palette 6 von der zu erreichenden, bezüglich der Laserschneidköpfe der Bearbeitungseinheit 2 vorgegebenen Sollposition ab, so nimmt eine Justiervorrichtung in Form einer mechanischen Indexierung 8 eine Feinpositionierung der Palette 6 vor.

Die gezeigte Palette 6 besitzt einen rechteckigen Palettenrahmen 9 mit Längsholmen 10, zwischen denen Werkstückauflageleisten 11 in Holmquerrichtung verlaufen. Der Übersichtlichkeit halber sind in Figur 1 lediglich zwei Paare von Werkstückauflageleisten 11 gezeigt. Diese sind herkömmlicher Bauart und lagern zu bearbeitende Bleche wie üblich auf Leistenspitzen. Gemeinschaftlich bilden die Werkstückauflageleisten 11 eine rostartige Werkstückauflage. Die Palette 6 insgesamt wird bei der Bearbeitung als Auflagetisch für das zu bearbeitende Blech genutzt.

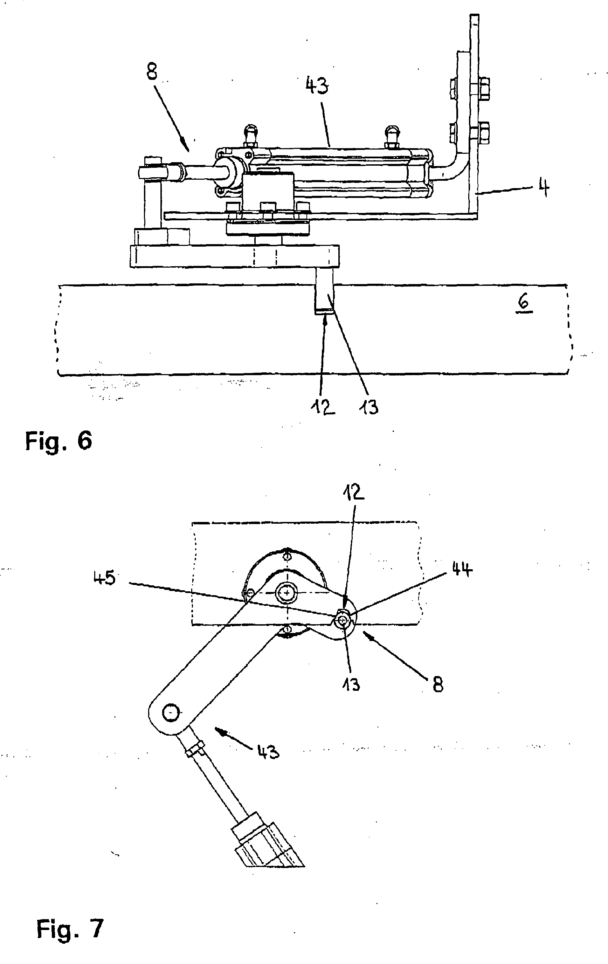

Der in Figur 1 obere Längsholm 10 des Palettenrahmens 9 ist an seinem rechten Ende mit einem als Indexierungsaufnahme 12 ausgebildeten Indexierungselement der Indexierung 8 versehen. Der Indexierungsaufnahme 12 zugeordnet ist ein maschinenrahmenseitiges Indexierungselement in Form eines Indexierungsbolzens 13. Im Detail wird die Indexierung 8 nachstehend zu den Figuren 6 und 7 beschrieben werden.

An dem in Figur 1 linken Ende des Palettenrahmens 9 sind als ladegutträgerseitige Mitnahmeelemente Mitnehmeraufnahmen 14, 15 angebracht. In die Mitnehmeraufnahme 14 greift ein Mitnehmer 16 ein. Der Mitnehmer 16 ist mit einem Fördermittel in Form einer Schubkette 17 verbunden und bildet insofern ein fordermittelseitiges Mitnahmeelement. Die Mitnehmeraufnahme 15 an der Palette 6 wird in dem gezeigten Beispielsfall nicht genutzt. Die Mitnehmeraufnahme 14 sowie der Mitnehmer 16 sind Teil einer Mitnahmeeinrichtung 18. Diese stellt eine Verbindung her zwischen der Schubkette 17 der Fördervorrichtung 7 und der Palette 6. Zum Antrieb der Schubkette 17 dient ein Kettenantriebsmotor 19, der an einem Gestell 20 der Fördervorrichtung 7 angeflanscht ist.

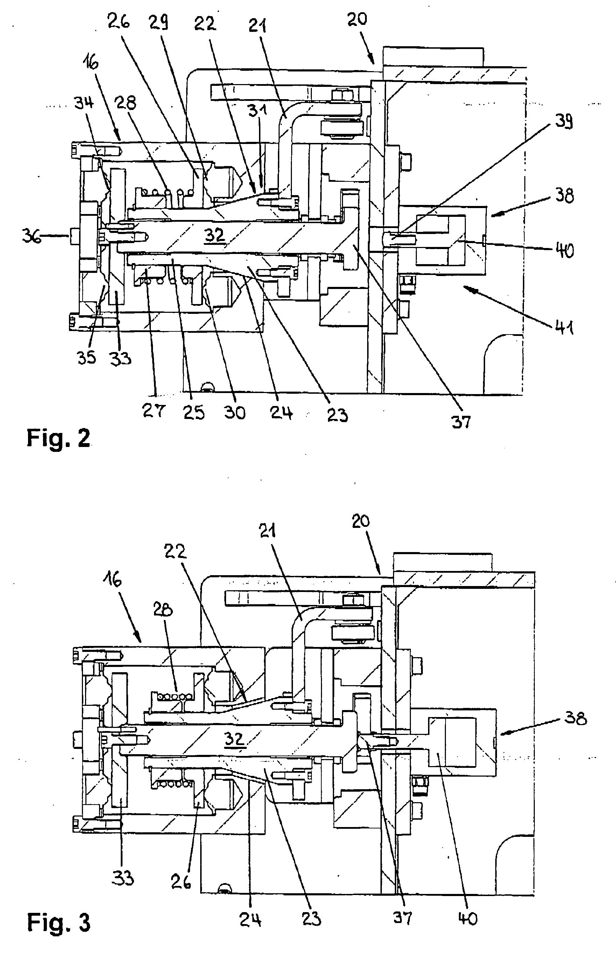

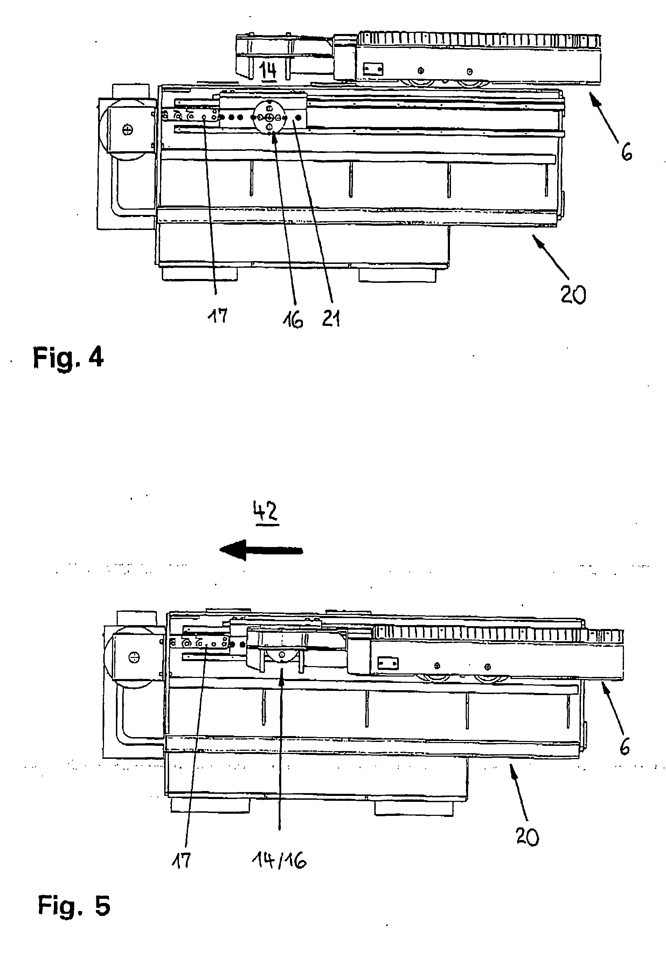

Ausweislich der Figuren 2 und 3 ist die Verbindung zwischen dem Mitnehmer 16 und der Schubkette 17 über eine Traglasche 21 hergestellt. Die Traglasche 21 ist mit der Schubkette 17 verbunden (s. auch Figuren 4, 5) und wird an dem Gestell 20 geführt.

Zwischen der Traglasche 21 und dem Mitnehmer 16 ist eine Kupplung 22 vorgesehen. Diese umfasst als fördermittelseitiges Kupplungselement einen Kupplungskonus 23, der mit der Traglasche 21 verschraubt ist. Dem Kupplungskonus 23 zugeordnet ist eine konische Aufnahme 24, die einstückig mit dem Mitnehmer 16 ausgeführt ist und ein mitnabmeelementseitiges Kupplungselement bildet.

Auf einem hohlzylindrischen Ansatz 25 des Kupplungskonus 23 sitzen eine konusseitige Druckplatte 26 als Widerlagerplatte, eine Widerlagerhülse 27 sowie eine zwischen der konusseitigen Druckplatte 26 und der Widerlagerhülse 27 vorgespannte Druckfeder 28. Die konusseitige Druckplatte 26 ist auf dem hohlzylindrischen Ansatz 25 gegen die Wirkung der Druckfeder 28 verschieblich. Die Widerlagerhülse 27 ist an der von dem Kupplungskonus 23 abliegenden Seite an dem hohlzylindrischen Ansatz 25 abgestützt. An der von der Druckfeder 28 abliegenden Seite ist die konusseitige Druckplatte 26 an Wälzelemente in Form von Kugeln 29, 30 angelegt, die ihrerseits an einem einwärts gerichteten Rand 31 des Mitnehmers 16 drehbar gelagert sind. Die abgeschrägte Stirnfläche des Randes 31 bildet einen Kupplungssitz der konischen Aufnahme 24 der Kupplung 22 aus.

Sowohl der Kupplungskonus 23 als auch dessen hohlzylindrischer Ansatz 25 werden in axialer Richtung von einem Schaltbolzen 32 durchsetzt. Dieser ist in axialer Richtung relativ zu dem Kupplungskonus 23 und dem hohlzylindrischen Ansatz 25 verschiebbar und an seinem von dem Gestell 20 abliegenden Ende mit einer Widerlagerplatte in Form einer konusfernen Druckplatte 33 verschraubt. Die konusferne Druckplatte 33 stützt sich an der dem Schaltbolzen 32 gegenüberliegenden Seite an Wälzkörpern in Form von Kugeln 34, 35 ab. Diese sind an einem Deckel 36 des Mitnehmers 16 drehgelagert. Unter der Wirkung der Druckfeder 28 werden die Kugeln 34, 35 über die konusseitige Druckplatte 26 und den Mitnehmer 16 gegen die konusferne Druckplatte 33 gezogen.

Der Schaltbolzen 32 weist an seinem zu dem Gestell 20 hin liegenden Ende einen Schaltkopf 37 auf, Zur Beaufschlagung des Schaltbolzens 32 an dem Schaltkopf 37 ist eine Schalteinrichtung in Form einer pneumatischen Kolben-Zylinder-Einheit 38 vorgesehen. Diese ist an dem Gestell 20 derart positioniert, dass ein Schaltansatz 39 eines Kolbens 40 dem Schaltkopf 37 des Schaltbolzens 32 gegenüberliegt, wenn die über den Mitnehmer 16 an die Schubkette 17 angebundene Palette 6 mittels der Schubkette 17 in eine Zielposition bewegt worden ist. Der Schaltbolzen 32 und die Kolben-Zylinder-Einheit 38 sind Teil einer Steuereinrichtung 41 der Kupplung 22.

Vor der Bewegung in die Zielposition ist die Palette 6 zunächst an die Schubkette 17 anzubinden. Die betreffenden Abläufe sind in den Figuren 4 und 5 dargestellt. Demnach ist die Palette 6 in einer von der Bearbeitungseinheit 2 der maschinellen Anordnung 1 abliegenden Ausgangsposition erhöht angeordnet (Figur 4). Gegenüber der erhöht angeordneten Palette 6 wird die Traglasche 21 mit dem Mitnehmer 16 über die Schubkette 17 in eine Stellung bewegt, bei welcher der Mitnehmer 16 an der Schubkette 17 der Mitnehmeraufnahme 14 an der Palette 6 in vertikaler Richtung gegenüberliegt. Anschließend wird die Palette 6 aus der angehobenen Position auf das Transportniveau abgesenkt. Dabei läuft der Mitnehmer 16 in die Mitnehmeraufnahme 14 ein. Die Palette 6 setzt auf Laufschienen des Gestells 20 auf. Es ergeben sich schließlich die Verhältnisse gemäß Figur 5.

Von dem Kettenantriebsmotor 19 angetrieben zieht nun die Schubkette 17 die Palette 6 in einer Förderrichtung 42 in die Zielposition. Während dieser Bewegung der Palette 6 befindet sich die Kupplung 22 zwischen Schubkette 17 und Mitnehmer 16 in dem Schaltzustand gemäß Figur 2. Der Kupplungskonus 23 liegt unter der Wirkung der Druckfeder 28 eng an dem zugeordneten Kupplungssitz der konischen Aufnahme 24 an. Infolgedessen ist die Kupplung 22 in Förderrichtung 42 der Palette 6 spielfrei. Daraus wiederum resultiert eine im Wesentlichen spielfreie Anbindung der Palette 6 an die angetrieben bewegte Schubkette 17. Eine gleichförmige, insbesondere ruckfreie Bewegung der Palette 6 in Förderrichtung 42 ist die Folge.

In der numerischen Steuerung der maschinellen Anordnung 1 ist für das zu bearbeitende Werkstück eine Bearbeitungs-Sollposition in dem Arbeitsbereich 5 der Bearbeitungseinheit 2 hinterlegt. Nimmt die Palette 6 ihre Sollposition ein, so befindet sich das auf der Palette 6 angeordnete, in den Zeichnungen der Einfachheit halber nicht dargestellte Werkstück, im vorliegenden Fall ein Blech, in der Bearbeitungs-Sollposition in dem Arbeitsbereich 5. Definiert ist diese Position des Werkstückes bzw. des Bleches insbesondere gegenüber den an dem Maschinenrahmen 4 der maschinellen Anordnung 1 geführten Laserschneidköpfen.

Über den motorischen Antrieb der Schubkette 17 wird für die Palette 6 eine Zielposition vorgegeben. Idealerweise stimmt diese Zielposition mit der Sollposition der Palette 6 überein. In der Praxis aber ist eine Abweichung der Zielposition von der Sollposition denkbar. Mögliche Gründe hierfür sind beispielsweise Schwankungen in der momentanen Dehnung der Schubkette 17 oder Schwankungen des momentanen Spiels in dem Antriebsstrang der Schubkette 17.

Da gleichzeitig die Anordnung des zu bearbeitenden Werkstückes in der Bearbeitungs-Sollposition und somit die Anordnung der Palette 6 in der Sollposition unabdingbare Voraussetzung für ein optimales Bearbeitungsergebnis ist, muss vor Beginn der Werkstückbearbeitung sichergestellt werden, dass sich die Palette 6 auch tatsächlich in der Sollposition befindet. Zu diesem Zweck dient die Indexierung 8. Diese ist herkömmlicher Bauart.

Wie im Einzelnen den Figuren 6 und 7 entnommen werden kann, ist der Indexierungsbolzen 13 der Indexierung 8 an dem Maschinenrahmen 4 der Bearbeitungseinheit 2 schwenkbar gelagert. Zur Schwenkbetätigung des Indexierungsbolzens 13 dient ein Schwenkantrieb 43 mit einer pneumatischen Kolben-Zylinder-Einheit.

Die Indexierungsaufnahme 12 an der Palette 6 erweitert sich zu ihrer Einlaufseite hin unter Ausbildung von Einlaufschrägen 44,45. Einlaufseitig ist die Weite der Indexierungsaufnahme 12 größer als der Durchmesser des Indexierungsbolzens 13. Zu ihrem Inneren hin verengt sich die Indexierungsaufnahme 12 derart, dass sie den Indexierungsbolzen 13 ohne ein in der Förderrichtung 42 oder in Gegenrichtung bestehendes Spiel aufnehmen kann.

Hat die Palette 6 ihre Zielposition erreicht, so wird der Kettenantriebsmotor 19 stillgesetzt. Die Kupplung 22 zwischen dem Mitnehmer 16 und der Schubkette 17 befindet sich zunächst noch in dem Zustand gemäß Figur 2. Der Schaltbolzen 32 der Kupplung 22 liegt mit dem Schaltkopf 37 dem Schaltansatz 39 an dem Kolben 40 der an dem Gestell 20 angebrachten pneumatischen Kolben-Zylinder-Einheit 38 gegenüber.

Wird nun die pneumatische Kolben-Zylinder-Einheit 38 betätigt, so drückt der Kolben 40 mit dem Schaltansatz 39 den Schaltbolzen 32 in Figur 2 nach links. Dabei bewegt sich der Schaltbolzen 32 relativ zu dem Kupplungskonus 23 und dem damit einstückigen hohlzylindrischen Ansatz 25. Über die konusferne Druckplatte 33 nimmt der Schaltbolzen 32 den Mitnehmer 16 einschließlich des Randes 31 mit der konischen Aufnahme 24 in Bewegungsrichtung mit. Infolgedessen wird der Kupplungssitz an der konischen Aufnahme 24 von dem Kupplungskonus 23 abgehoben und es ergibt sich der in Figur 3 gezeigte Betriebszustand der Kupplung 22. Zwischen dem Kupplungskonus 23 und dem Kupplungssitz an der konischen Aufnahme 24 und somit auch zwischen dem Kupplungskonus 23 und dem Mitnehmer 16 besteht nun ein allseitiges Spiel in der Größenordnung von 5 bis 6 Millimetern. Maximal um diesen Betrag ist die Palette 6, die an der Mitnehmeraufnahme 14 spielfrei an dem Mitnehmer 16 gelagert ist, in einer Justagerichtung, d.h. in der Förderrichtung 42 oder in Gegenrichtung, relativ zu dem mit der Schubkette 17 spielfrei verbundenen Kupplungskonus 23 beweglich. Die Aktivierung der Kolben-Zylinder-Einheit 38 kann numerisch gesteuert erfolgen. Denkbar ist auch eine Ansteuerung über einen Schalter, der von der Palette 6 beim Einfahren in die Zielposition betätigt wird.

Wird nun die Indexierung 8 (beispielsweise numerisch gesteuert) aktiviert und schwenkt folglich der Indexierungsbolzen 13 in diejenige Schwenkstellung, welche der Sollposition der Palette 6 zugeordnet ist, so läuft der Indexierungsbolzen 13 in die Indexierungsaufnahme 12 an der Palette 6 ein. Weicht die Zielposition der Palette 6 von der Sollposition ab, so trifft der Indexierungsbolzen 13 bei seiner Schwenkbewegung auf eine der Einlaufschrägen 44, 45 der Indexierungsaufnahme 12. Im Zusammenwirken mit der betreffenden Einlaufschräge 44, 45 verschiebt der Indexierungsbolzen 13 die mit der Indexierungsaufnahme 12 fest verbundene Palette 6 in Förderrichtung 42 oder in Gegenrichtung so weit, bis die Palette 6 ihre Sollposition einnimmt. Anschließend kann die Werkstückbearbeitung beginnen. Der Feinpositionierung der Palette 6 wird lediglich ein geringer Bewegungswiderstand entgegengesetzt. Dafür sorgt u. a. der Umstand, dass der mit der Palette 6 bewegte Mitnehmer 16 über Wälzelemente, nämlich über die Kugeln 29, 30, 34, 35 an den bei der Justagebewegung ortsfesten Druckplatten 26, 33 gelagert ist. Die kippsicher auf dem hohlzylindrischen Ansatz 25 aufsitzende Druckplatte 26 sowie die kippsicher mit dem Schaltbolzen 32 verbundene Druckplatte 33 stützen den mit Spiel gegenüber dem Kupplungskonus 23 angeordneten Mitnehmer 16 gegen Verkippen ab. Die Druckplatten 26, 33 bieten eine breite Basis für diese Abstützung. Im Zusammenspiel mit den Kugeln 29, 30, 34, 35 bewirken die Druckplatten 26, 33 bei der Feinpositionierung der Palette 6 eine geführte und somit definierte Bewegung des Mitnehmers 16 gegenüber dem Kupplungskonus 23.

Nach Beendigung der Werkstückbearbeitung wird der Indexierungsbolzen 13 aus der Indexierungsaufnahme 12 ausgeschwenkt, Die Kupplung 22 zwischen dem Mitnehmer 16 und der Schubkette 17 wird anschließend von dem spielbehafteten Schaltzustand gemäß Figur 3 in den spielfreien Zustand gemäß Figur 2 überführt. Zu diesem Zweck wird der Schaltansatz 39 an dem Kolben 40 durch entsprechende Ansteuerung der pneumatischen Kolben-Zylinder-Einheit 38 in seine Ausgangposition gemäß Figur 2 zurückbewegt, Unter der Wirkung der zuvor beim Öffnen der Kupplung 22 gespannten Druckfeder 28 bewegt sich der Kupplungskonus 23 in seine Ausgangsstellung zurück, in welcher er eng an dem Kupplungssitz der konischen Aufnahme 24 anliegt. Anschließend wird die nun wieder spielfrei an die Schubkette 17 angebundene Palette 6 angetrieben von dem Kettenantriebmotor 19 entgegen der Förderrichtung 42 aus dem Arbeitsbereich 5 der Bearbeitungseinheit 2 in eine Position bewegt, in welcher das auf der Palette 6 angeordnete, nun bearbeitete Werkstück oder aber ein bei der Werkstückbearbeitung verbliebener Bearbeitungsrest, beispielsweise ein Restgitter, von der Palette 6 abgenommen werden kann.

## Patentansprüche

1. Maschinelle Anordnung zum Positionieren von Werkstücken und/oder von Bearbeitungsresten einer Werkstückbearbeitung,
• mit einem Ladegutträger (6), der mit wenigstens einem Werkstück und/oder mit wenigstens einem Bearbeitungsrest beladbar ist,
• mit einer Fördervorrichtung (7), mittels derer ein Ladegutträger (6) in eine Zielposition bewegbar ist sowie
• mit einer Justiervorrichtung (8), mittels derer der Ladegutträger (6) bei Abweichen der Zielposition von einer Sollposition unter Bewegen des Ladegutträgers (6) in einer Justagerichtung in die Sollposition überführbar ist,
wobei die Fördervorrichtung (7) ein angetrieben bewegbares Fördermittel (17) für den Ladegutträger (6) und zwischen dem Fördermittel (17) und dem Ladegutträger (6) eine Mitnahmeeinrichtung (18) aufweist, über welche der Ladegutträger (6) an das Fördermittel (17) anbindbar ist und die ihrerseits ein mit dem Fördermittel (17) bewegungsverbundenes fördermittelseitiges Mitnahmeelement (16) sowie ein mit dem Ladegutträger (6) bewegungsverbundenes ladegutträgerseitiges Mitnahmeelement (14) umfasst, **dadurch gekennzeichnet, dass** das fördermittelseitige Mitnahmeelement (16) mit dem Fördermittel (17) und/oder das ladegutträgerseitige Mitnahmeelement (14) mit dem Ladegutträger (6) über eine steuerbare Kupplung (22) bewegungsverbunden ist; deren Spiel in der Justagerichtung des Ladegutträgers (6) steuerbar und dabei von einem verhältnismäßig kleinen Wert während der Bewegung des Ladegutträgers (6) in die Zielposition auf einen verhältnismäßig großen Wert vergrößerbar ist, der zu der mittels der Justiervorrichtung (8) vorgenommenen Überführung des Ladegutträgers (6) in die Sollposition vorgesehen ist.

2. Maschinelle Anordnung nach Anspruch 1, **dadurch gekennzeichnet, dass** das fördermittelseitige Mitnahmeelement (16) mit dem Fördermittel (17) über eine steuerbare Kupplung (22) bewegungsverbunden ist.

3. Maschinelle Anordnung nach einem der vorhergehenden Ansprüche, **dadurch gekennzeichnet, dass** die steuerbare Kupplung (22) ein mitnahmeelementseitiges Kupplungselement (24) sowie ein fördermittelseitiges Kupplungselement (23) und/oder ein mitnahmeelementseitiges Kupplungselement sowie ein ladegutträgerseitiges Kupplungselement aufweist und dass das Spiel der Kupplung (22) in der Justagerichtung des Ladegutträgers (6) steuerbar ist, indem der gegenseitige Abstand der einander zugeordneten Kupplungselemente (23, 24) in der Justagerichtung des Ladegutträgers (6) von einem verhältnismäßig kleinen Wert während der Bewegung des Ladegutträgers (6) in die Zielposition auf einen verhältnismäßig großen Wert vergrößerbar ist, der zu der mittels der Justiervorrichtung (8) vorgenommenen Überführung des Ladegutträgers (6) in die Sollposition vorgesehen ist.

4. Maschinelle Anordnung nach einem der vorhergehenden Ansprüche, **dadurch gekennzeichnet, dass** die einander zugeordneten Kupplungselemente (23, 24) relativ zueinander bewegbar und dadurch ihr gegenseitiger Abstand in der Justagerichtung des Ladegutträgers (6) von einem verhältnismäßig kleinen auf einen verhältnismäßig großen Wert vergrößerbar ist,

5. Maschinelle Anordnung nach einem der vorhergehenden Ansprüche, **dadurch gekennzeichnet, dass** wenigstens eines der einander zugeordneten Kupplungselemente (23, 24) einen Querschnitt aufweist, der sich in Richtung der Achse der Relativbewegung der Kupplungselemente (23, 24) keilartig erweitert.

6. Maschinelle Anordnung nach einem der vorhergehenden Ansprüche, **dadurch gekennzeichnet, dass** wenigstens eines der einander zugeordneten Kupplungselemente (23, 24) als sich in Richtung der Achse der Relativbewegung der Kupplungselemente (23, 24) erweiterndes Konuselement ausgebildet ist.

7. Maschinelle Anordnung nach einem der vorhergehenden Ansprüche, **dadurch gekennzeichnet, dass** die steuerbare Kupplung (22) mittels einer Steuereinrichtung (41) steuerbar ist.

8. Maschinelle Anordnung nach einem der vorhergehenden Ansprüche, **dadurch gekennzeichnet, dass** die Steuereinrichtung (41) zur Steuerung der Kupplung (22) eine Kolben-Zyhnder-Einheit (38) umfasst, mittels derer wenigstens eines der einander zugeordneten Kupplungselemente (23, 24) relativ zu dem anderen Kupplungselement (23, 24) bewegbar und dadurch der gegenseitige Abstand der einander zugeordneten Kupplungselemente (23, 24) in der Justagerichtung des Ladegutträgers (6) von einem verhältnismäßig kleinen auf einen verhältnismäßig großen Wert vergrößerbar ist.

9. Maschinelle Anordnung nach einem der vorhergehenden Anspruche, **dadurch gekennzeichnet, dass** das Spiel der Kupplung (22), gegebenenfalls der gegenseitige Abstand der einander zugeordneten Kupplungselemente (23, 24), in der Justagerichtung des Ladegutträgers (6) gegen die Wirkung einer Rückstellkraft von einem verhältnismäßig kleinen auf einen verhältnismäßig großen Wert vergrößerbar und unter der Wirkung der Rückstellkraft von dem verhältnismäßig großen auf einen verhältnismäßig kleinen Wert verkleinerbar ist.

10. Maschinelle Anordnung nach einem der vorhergehenden Ansprüche, **dadurch gekennzeichnet, dass** das fördermittelseitige Mitnahmeelement (16) und/oder das ladegutträgerseitige Mitnahmeelement gemeinschaftlich mit dem betreffenden mitnahmeelementseitigen Kupplungselement (24) relativ zu dem zugeordneten Kupplungselement (23) bewegbar ist und dass bei verhältnismäßig großem Wert des gegenseitigen Abstandes der einander zugeordneten Kupplungselemente (23, 24) in der Justagerichtung des Ladegutträgers (6) das fördermittelseitige Mitnahmeelement (16) und/oder das ladegutträgerseitige Mitnahmeelement gegen Verkippen an einem zugeordneten Widerlager abgestützt ist.

11. Maschinelle Anordnung nach einem der vorhergehenden Ansprüche, **dadurch gekennzeichnet, dass** das fördermittelseitige Mitnahmeelement (16) und/oder das ladegutträgerseitige Mitnahmeelement über wenigstens ein Wälzelement (29, 30, 34, 35) an dem zugeordneten Widerlager abgestützt ist.

12. Maschinelle Anordnung nach einem der vorhergehenden Ansprüche, **dadurch gekennzeichnet, dass** das Widerlager zur Abstützung des fördermittelseitigen Mitnahmeelementes (16) und/oder das Widerlager zur Abstützung des ladegutträgerseitigen Mitnahmeelementes als Widerlagerplatte (26, 33) ausgebildet ist.

13. Maschinelle Anordnung zum Bearbeiten von Werkstücken, mit einer Bearbeitungseinheit (2) sowie mit einer nach einem der vorstehenden Ansprüche ausgebildeten maschinellen Anordnung (3) zum Positionieren von Werkstücken und/oder von Bearbeitungsresten einer Werkstückbearbeitung.

## Claims

1. Mechanical arrangement for positioning workpieces and/or pieces of processing waste from a workpiece-processing operation,
• having a load carrier (6) which may be loaded with at least one workpiece and/or with at least one piece of processing waste,
• having a conveying apparatus (7) by means of which a load carrier (6) is movable to a target position and
• having an adjusting device (8) by means of which the load carrier (6) may be transferred to a desired position, with the load carrier (6) being moved in an adjustment direction, if the target position deviates from the desired position,
wherein the conveying apparatus (7) has a driven movable conveying means (17) for the load carrier (6) and, between the conveying means (17) and the load carrier (6), an engaging device (18) *via* which the load carrier (6) may be attached to the conveying means (17) and which for its part includes an engaging element (16) on the conveying means side, which is coupled in motion with the conveying means (17), and an engaging element (14) on the load carrier side, which is coupled in motion with the load carrier (6), **characterised in that** the engaging element (16) on the conveying means side is coupled in motion with the conveying means (17) and/or the engaging element (14) on the load carrier side is coupled in motion with the load carrier (6) via a controllable coupling (22) the freedom of movement of which in the adjustment direction of the load carrier (6) is controllable and in so doing may be increased from a relatively small value during movement of the load carrier (6) to the target position to a relatively large value envisaged for transferring of the load carrier (6) to the desired position, which is performed by means of the adjusting device (8).

2. Mechanical arrangement according to claim 1, **characterised in that** the engaging element (16) on the conveying means side is coupled in motion with the conveying means (17) *via* a controllable coupling (22).

3. Mechanical arrangement according to either of the preceding claims, **characterised in that** the controllable coupling (22) has a coupling element (24) on the engaging element side and a coupling element (23) on the conveying means side and/or a coupling element on the engaging element side and a coupling element on the load carrier side, and the freedom of movement of the coupling (22) in the adjustment direction of the load carrier (6) is controllable by means of the fact that the spacing of the mutually associated coupling elements (23, 24) from each other in the adjustment direction of the load carrier (6) may be increased from a relatively small value during movement of the load carrier (6) to the target position to a relatively large value envisaged for transferring of the load carrier (6) to the desired position, which is performed by means of the adjusting device (8).

4. Mechanical arrangement according to any one of the preceding claims, **characterised in that** the mutually associated coupling elements (23, 24) are movable relative to each other and **in that** manner their spacing from each other in the adjustment direction of the load carrier (6) may be increased from a relatively small value to a relatively large value.

5. Mechanical arrangement according to any one of the preceding claims, **characterised in that** at least one of the mutually associated coupling elements (23, 24) has a cross-section that becomes wider in the manner of a wedge in the direction of the axis of relative movement of the coupling elements (23, 24).

6. Mechanical arrangement according to any one of the preceding claims, **characterised in that** at least one of the mutually associated coupling elements (23, 24) is in the form of a cone element becoming wider in the direction of the axis of relative movement of the coupling elements (23, 24).

7. Mechanical arrangement according to any one of the preceding claims, **characterised in that** the controllable coupling (22) is controllable by means of a control device (41).

8. Mechanical arrangement according to any one of the preceding claims, **characterised in that** the control device (41) for controlling the coupling (22) includes a piston-cylinder unit (38) by means of which at least one of the mutually associated coupling elements (23, 24) is movable relative to the other coupling element (23, 24) and **in that** manner the spacing of the mutually associated coupling elements (23, 24) from each other in the adjustment direction of the load carrier (6) may be increased from a relatively small value to a relatively large value.

9. Mechanical arrangement according to any one of the preceding claims, **characterised in that** the freedom of movement of the coupling (22), and, if applicable, the spacing of the mutually associated coupling elements (23, 24) from each other, in the adjustment direction of the load carrier (6) may be increased from a relatively small value to a relatively large value against the action of a restoring force and may be reduced from a relatively large value to a relatively small value under the action of the restoring force.

10. Mechanical arrangement according to any one of the preceding claims, **characterised in that** the engaging element (16) on the conveying means side and/or the engaging element on the load carrier side is movable, together with the relevant coupling element (24) on the engaging element side, relative to the associated coupling element (23) and, when the spacing of the mutually associated coupling elements (23, 24) from each other in the adjustment direction of the load carrier (6) has a relatively large value, the engaging element (16) on the conveying means side and/or the engaging element on the load carrier side is supported on an associated abutment to prevent tilting.

11. Mechanical arrangement according to any one of the preceding claims, **characterised in that** the engaging element (16) on the conveying means side and/or the engaging element on the load carrier side is supported on the associated abutment via at least one rolling element (29, 30, 34, 35).

12. Mechanical arrangement according to any one of the preceding claims, **characterised in that** the abutment for supporting the engaging element (16) on the conveying means side and/or the abutment for supporting the engaging element on the load carrier side is in the form of an abutment plate (26, 33).

13. Mechanical arrangement for processing workpieces, comprising a processing unit (2) and a mechanical arrangement (3) constructed in accordance with any one of the preceding claims for positioning workpieces and/or pieces of processing waste from a processing operation.

## Revendications

1. Système mécanique de positionnement de pièces et/ou de déchets d'usinage d'un usinage de pièces,
- avec un support de chargement (6) qui peut être chargé d'au moins une pièce et/ou d'au moins un déchet d'usinage,
- avec un dispositif de transport (7) au moyen duquel un support de chargement (6) peut être déplacé dans une position de destination, et
- avec un dispositif d'ajustement (8) au moyen duquel le support de chargement (6), en cas d'écart entre la position de destination et une position de consigne, peut être transféré dans la position de consigne avec déplacement du support de chargement (6) dans une direction d'ajustement,
sachant que le dispositif de transport (7) présente un moyen de transport mobile entraîné (17) pour le support de chargement (6) et un équipement entraîneur (18) entre le moyen de transport (17) et le support de chargement (6), équipement au moyen duquel le support de chargement (6) peut être relié au moyen de transport (17) et qui comprend lui-même un élément entraîneur (16) côté moyen de transport, lié en déplacement au moyen de transport (17), et un élément entraîneur (14) côté support de chargement, lié en déplacement au support de chargement (6),
**caractérisé en ce que** l'élément entraîneur (16) du côté du moyen de transport est lié en déplacement au moyen de transport (17) et/ou l'élément entraîneur (14) côté support de chargement est lié en déplacement au support de chargement (6) au moyen d'un accouplement asservissable (22), dont le jeu dans la direction d'ajustement du support de chargement (6) peut être commandé en pouvant alors être augmenté d'une valeur relativement petite pendant le déplacement du support de chargement (6) dans la position de destination à une valeur relativement grande qui est prévue pour le transfert, entrepris au moyen du dispositif d'ajustement (8), du support de chargement (6) dans la position de consigne.

2. Système mécanique selon la revendication 1, **caractérisé en ce que** l'élément entraîneur (16) côté moyen de transport est lié en déplacement au moyen de transport (17) au moyen d'un accouplement asservissable (22).

3. Système mécanique selon l'une des revendications précédentes, **caractérisé en ce que** l'accouplement asservissable (22) présente un élément d'accouplement (24) du côté de l'élément entraîneur ainsi qu'un élément d'accouplement (23) du côté du moyen de transport, et/ou un élément d'accouplement du côté de l'élément entraîneur ainsi qu'un élément d'accouplement du côté du support de chargement, et **en ce que** le jeu de l'accouplement (22) dans la direction d'ajustement du support de chargement (6) peut être commandé par le fait que la distance mutuelle entre les éléments d'accouplement mutuellement associés (23, 24) dans la direction d'ajustement du support de chargement (6) peut être augmentée d'une valeur relativement petite pendant le déplacement du support de chargement (6) dans la position de destination à une valeur relativement grande qui est prévue pour le transfert, entrepris au moyen du dispositif d'ajustement (8), du support de chargement (6) dans la position de consigne.

4. Système mécanique selon l'une des revendications précédentes, **caractérisé en ce que** les éléments d'accouplement mutuellement associés (23, 24) sont mobiles l'un par rapport à l'autre, et leur distance mutuelle dans la direction d'ajustement du support de chargement (6) peut ainsi être augmentée d'une valeur relativement petite à une valeur relativement grande.

5. Système mécanique selon l'une des revendications précédentes, **caractérisé en ce qu'**au moins un des éléments d'accouplement mutuellement associés (23, 24) présente une section qui s'élargit en forme de coin en direction de l'axe du mouvement relatif des éléments d'accouplement (23, 24).

6. Système mécanique selon l'une des revendications précédentes, **caractérisé en ce qu'**au moins un des éléments d'accouplement mutuellement associés (23, 24) est réalisé sous la forme d'un élément conique s'élargissant en direction de l'axe du mouvement relatif des éléments d'accouplement (23, 24).

7. Système mécanique selon l'une des revendications précédentes, **caractérisé en ce que** l'accouplement asservissable (22) peut être commandé au moyen d'un équipement de commande (41).

8. Système mécanique selon l'une des revendications précédentes, **caractérisé en ce que** l'équipement de commande (41) pour la commande de l'accouplement (22) comprend un ensemble piston-cylindre (38) au moyen duquel au moins un des éléments d'accouplement mutuellement associés (23, 24) peut être déplacé par rapport à l'autre élément d'accouplement (23, 24), et la distance mutuelle des éléments d'accouplement mutuellement associés (23, 24) dans la direction d'ajustement du support de chargement (6) peut ainsi être augmentée d'une valeur relativement petite à une valeur relativement grande.

9. Système mécanique selon l'une des revendications précédentes, **caractérisé en ce que** le jeu de l'accouplement (22), le cas échéant la distance mutuelle des éléments d'accouplement mutuellement associés (23, 24), dans la direction d'ajustement du support de chargement (6), peut être augmenté d'une valeur relativement petite à une valeur relativement grande contre l'action d'une force de rappel, et peut être diminué de la valeur relativement grande à une valeur relativement petite sous l'action de la force de rappel.

10. Système mécanique selon l'une des revendications précédentes, **caractérisé en ce que** l'élément entraîneur (16) du côté du moyen de transport et/ou l'élément entraîneur du côté du support de chargement peut être déplacé conjointement avec l'élément d'accouplement concerné (24) du côté de l'élément entraîneur par rapport à l'élément d'accouplement associé (23), et **en ce que**, en cas de valeur relativement grande de la distance mutuelle des éléments d'accouplement mutuellement associés (23, 24) dans la direction d'ajustement du support de chargement (6), l'élément entraîneur (16) du côté du moyen de transport et/ou l'élément entraîneur du côté du support de chargement est soutenu contre un élément associé de contre-appui afin de l'empêcher de basculer.

11. Système mécanique selon l'une des revendications précédentes, **caractérisé en ce que** l'élément entraîneur (16) du côté du moyen de transport et/ou l'élément entraîneur du côté du support de chargement est soutenu contre l'élément associé de contre-appui par l'intermédiaire d'au moins un élément de roulement (29, 30, 34, 35).

12. Système mécanique selon l'une des revendications précédentes, **caractérisé en ce que** l'élément de contre-appui pour le soutien de l'élément entraîneur (16) du côté du moyen de transport et/ou l'élément de contre-appui pour le soutien de l'élément entraîneur du côté du support de chargement est réalisé sous forme de plaque de contre-appui (26, 33).

13. Système mécanique d'usinage de pièces, avec une unité d'usinage (2) et avec un système mécanique (3) configuré selon l'une des revendications précédentes pour le positionnement de pièces et/ou de déchets d'usinage d'un usinage de pièces.
